# EUROPEAN PATENT APPLICATION

(11) **EP 4 124 598 A1**
(43) Date of publication of application: **01.02.2023**
(21) Application number: 22169839.2
(22) Date of filing: 25.04.2022
(51) Int. Cl.: B66B 1/46, B41M 3/16

(54) **A BRAILLE PLATE FOR ELEVATOR AND MANUFACTURING METHOD THEREOF**

(30) Priority: 31.07.2021 TW 110128245
(71) Applicant: PrintGoal Technology Co., Ltd., New Taipei City 220 (TW)
(72) Inventor: CHEN, Ying-Chieh, 104 Taipei City (TW)
(74) Representative: Wittmann, Günther

(57) **Abstract**

This invention discloses a braille plate for an elevator. The braille plate comprises a plurality of substrates (30), and a plurality of bump structures (31). In present invention, each substrate (30) is formed on a body (1) via crosslinking agent, and each of the bump structures (31) is formed by at least one main layer (32). Furthermore, the body (1) is an elevator decorative plate.

## Description

### FIELD OF THE INVENTION

The present invention relates to a braille plate and manufacturing method thereof, and more particularly to a braille plate which is used for mounting on elevator and the manufacturing method thereof.

### BACKGROUND

Elevators typically provide a configuration of braille, providing the guide for users by touching. In generally, the braille in plastic form is alternatively attached to an elevator decorative plate or directly structured on an elevator control panel via metalworking.

In this way, the braille in plastic form is usually attached manually. It causes an inaccuracy attachment position or the inner leakage of the air, therefore to peel off from the elevator, and in order to the temperature change. Furthermore, the elevator decorative plate which is made of metal materials cannot have a seamless visual appearance, even if the braille in plastic form is transparent, which results in inferior texture of the overall product and easily causing detachment by damages via fingers or sharp objects.

During the process of hot stamped molding, the formed bump structure may be interfered by the difference of material characteristics of metal. The overall shape of each elevator decorative plate cannot be ensured that is not affected. Moreover, the bumped small piece metal plates which are used for attaching on the elevator metal decorative plate still have the problems such as the oblique dislocation or failing to form in a one-piece structure. This phenomenon means that the process (stamped molding) is not suitable for manufacturing all types of metal elevator decorative plate. Once the elevator panel is required to have numerous floors of a tall building, the area of metal or plastic plate becomes more wide and large, therefore the needs of installation space increases simultaneously. The elevator panel with certain area may not be completely satisfied by the braille which is manufactured by the traditional process.

### SUMMARY

In order to solve the problems mentioned in the background, the present invention relates to a braille plate and manufacturing method thereof, and more particularly to a braille plate for elevator and manufacturing method thereof. The braille plate has an advantage that is applicable to any elevator decorative plate which made of metal materials. In particular, the braille plate is provided as a structure formed by a substrate which is formed-after-formation of a body and contains crosslinking agent. With the aforementioned method, the invention may generate a braille character via the predetermined bump rules without affecting the appearance or surface of the elevator decorative plate while saving manufacturing space.

In accordance with some embodiments of the disclosed invention, a braille plate is provided. The braille plate comprises a plurality of substrates and a plurality of bump structures. The plurality of substrates, contain a crosslinking agent and form on a body. The plurality of bump structures, are formed by at least one main layer. Further, the aforementioned body is an elevator decorative plate.

In accordance with some embodiments of the disclosed invention, a manufacturing method of the braille plate is provided. The manufacturing method comprises: provide a body mounted to an elevator; forming a substrate having a pattern shape on the body via coating a crosslinking agent. Form at least one main layer on the substrate in accordance with a maximum diameter and a maximum height, the maximum height is formed by a ratio which is determined by the maximum diameter: the maximum height. Form a bump structure by curing the at least one main layer via a curing process. Perform the aforementioned steps repeatedly or synchronous multiple-times, and finally form a braille character on the body via the plurality of bump structures.

The above summary of the present invention is to provide a basic description of the various aspects and features of the present invention. It is not a detailed description. Its purpose is not to specifically recite keys or critical elements of the present invention, and it is not intended to limit the scope of the present invention. It merely presents a few concepts of the present invention in a concise manner.

### BRIEF DESCRIPTION OF THE DRAWINGS

FIG 1 is a schematic diagram depicting a braille plate for elevator in accordance with an embodiment of the present invention.
FIG 2 is a schematic diagram depicting a braille character of a braille plate for elevator in accordance with an embodiment of the present invention.
FIG 3 is another schematic diagram depicting a braille character of a braille plate for elevator in accordance with an embodiment of the present invention.
FIG 4 is a flowchart illustrating a manufacturing method of a braille plate for elevator in accordance with an embodiment of the present invention.

### DETAILED DESCRIPTION OF THE INVENTION

To clarify the purpose, technical solutions, and the advantages of the disclosure, embodiments of the present invention will now be described more fully hereinafter with reference to the accompanying drawings.

The present invention relates to a braille plate and manufacturing method thereof, and more particularly to a braille plate for elevator and manufacturing method thereof.

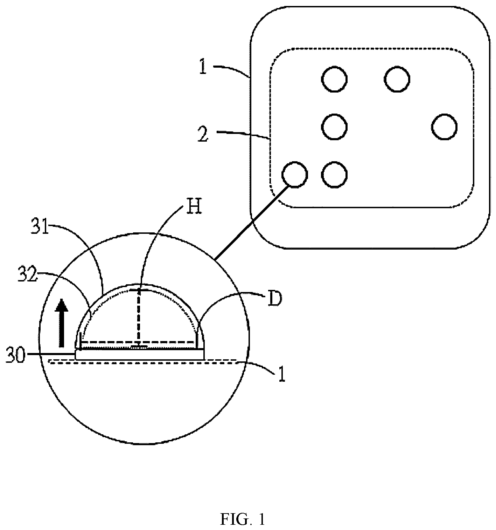

Please see FIG. 1. FIG. 1 is a schematic diagram depicting a braille plate for elevator in accordance with an embodiment of the present invention. In the present embodiment, FIG. 1 shows a body 1 as an elevator decorative plate such as a steel plate with PVC coating film and a baking enamel steel plate. On the other hand, the body 1 may be made of/from any suitable material such as glass, metal (e.g., including aluminum, stainless steel), woods (e.g., including lignocellulosic materials) or synthetic resin. Particularly, a substrate 30 with a pattern shape forms on the body 1 via crosslinking agent, and then forming a main layer 32 on the substrate 32, and so as to form a braille character 2 on the body 1 that can be read by touching.

As used hereinafter, the term "main layer 32" is a portion of material having a certain height included in a bump structure (e. g., as a maximum height H shown in FIG. 1). The material can included but not limited to PMMA, PET, PC, PDMS, ceramic, glass or combinations thereof. Similarly, the term "substrate 30" is a single layer crosslinking material or a multilayer crosslinking material such as resin, that supports the bump structure 31 to stably form on the aforementioned body 1.

The present embodiment assumes that the substrate 30 is rounded or substantially rounded, and assumes that the aforementioned main layer 32 is successively formed the aforementioned bump structure 31 along the direction of an arrow shown in FIG. 1. Thereby, the main layer 32 finally has a maximum diameter D which is formed in a ratio decided by the variation of maximum height H (that is, the cross-section area of the bump structure 31 may gradually decrease with the reducing of the diameter of the main layer 32). Furthermore, the maximum height H is between 0.1 mm and 1.05 mm, preferably between 0.65mm and 0.85mm; the maximum diameter D is between 0.1 mm and 1.6 mm, preferably between 1.55 mm and 1.59 mm; and the ratio is between 1.5 and 3 (i.e., 1.5≦D/H≦3). In this case, the outer contour of the bump structure 31 is a semi-spherical shape or is at least in part by a continuous curved surface with same direction. The plurality of the bump structures are sequentially formed or are simultaneously formed on the body 1 in accordance with the predetermined bump rules such as the "Standard dimensions for the US Braille Cell"; and then forming the aforementioned braille character 2.

In some embodiments, the substrate 30 may be assumed to be rectangle shape, substantially rectangle shape or any suitable pattern shape. In this case, the bump structure 31 may be assumed to be formed in following instructions. Form the aforementioned main layer 32 with a predetermined height along the direction of an arrow shown in FIG. 1 according to the pattern shape first. Thereafter, the continuous formation of the aforementioned bump structure 31 on the predetermined height is necessary. Finally, the aforementioned braille character 2 forms on the aforementioned body 1. The term "continuous formation" used here is to refer to the process for gradually forming the main layer 32 on the predetermined height to reach the maximum height H between the ratio (that is, 1.5≦D/H≦3).

On the other hand, when the aforementioned body 1 is a glass layer, the crosslinking agent may use isocyanate paints such as water-soluble isocyanate compound, epoxy-based paints such as poly-epoxy-based compound, ammonia-based compound or other paints which consist of resin. Moreover, when the aforementioned body 1 is a metal layer consisting of Al (aluminum), Cu (copper) or both, the embodiment may alternatively performs a degreasing treatment (e. g., alkali-degreased and solvent-degreased) on surface of the body 1 and therefore to remove oil-deposits being on such surface. Thereafter, the coating or inkjet printing the crosslinking agent on the surface of the body 1 according to the aforementioned pattern shape will be performed. In this embodiment, the sort of crosslinking agent can be solely used or in combination with other paints. Furthermore, it is noted that the resin which is used to consist the crosslinking agent in the present invention is not limited, i.e. the resin could be any type of resin, such as acrylic resin and polyester resin.

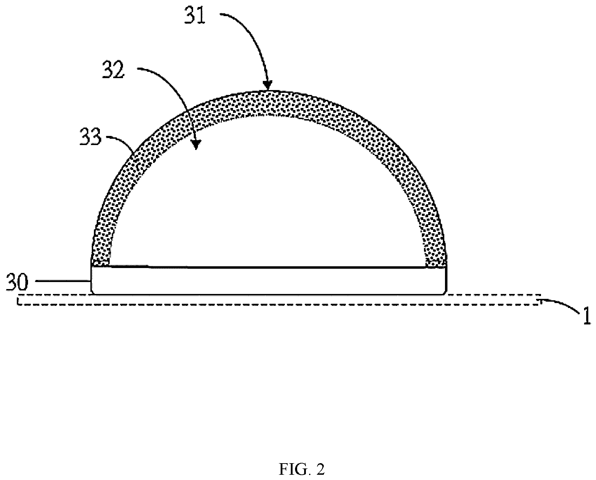

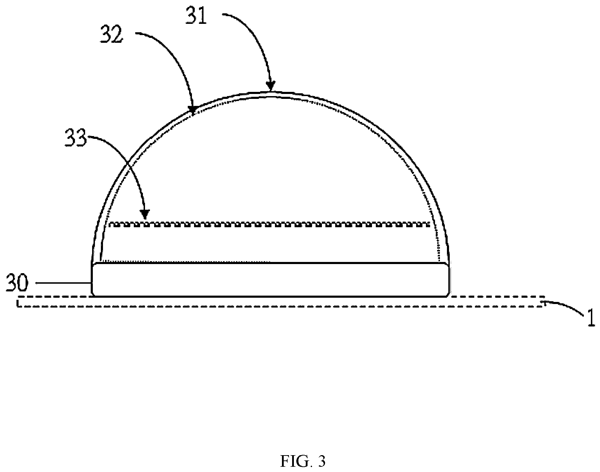

In the present embodiment, when each bump structure 31 respectively forms on main layer 32, the bump structure 31 may optionally include a decorative layer 33 as shown in FIG. 2 or FIG. 3. In this case, the decorative layer 33 can be designed to enable the bump structure 31 having animated visual effects (i.e., discoloration, matte surface or luminous) or having functionalities (i.e., anti-abrasion, anti-scratch or anti-bacterial).

For example, when the decorative layer 33 contains particles. The particles may be metallic particles, or non-metallic particles such as stones. As such, it is possible to enhance the tactile impression by adjusting the surface roughness of the bump structure 31. In particular, when the particles are rubber particles, the structural stability of the bump structure 31 can be enhanced by damping the touching forces due to the position of the particles adequately adjusted.

For another example, when the decorative layer 33 is a layer contains powder. The powder may include but not limited to metallic powder, metal-oxide powder, fluorescent powder, ceramic powder or combinations thereof; and the layer may be shaped on the bump structure 31 via adhesive agent. The term "shaped" used here is to refer to the process for inkjet printing three-dimensional patterns such as relief structures, or two-dimensional patterns such as hollow patterns and textures. Furthermore, the adhesive agent may be a material that needs to be added additionally or a material that is a portion of the main layer 32, in order to adhere directly or indirectly the layer on the main layer 32 to form the decorative layer 33. It is noted that material which is used to consist the adhesive agent in the present invention is not limited, e.g., the material may be a material for adhering heterogeneous materials therebetween, and the material may also be selected for use based on the requirements of visual effects such as light-transmitting.

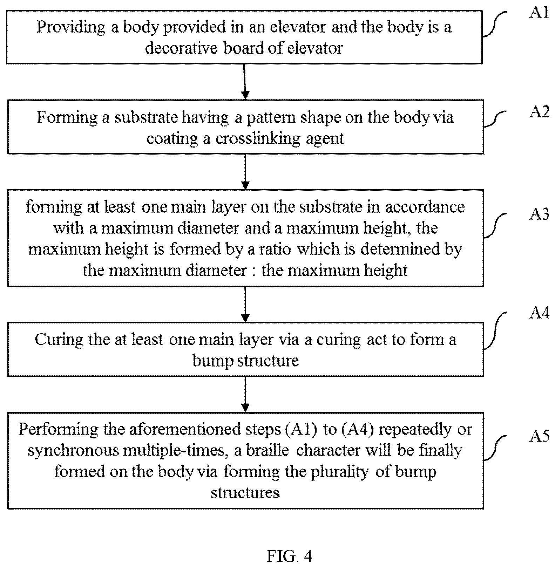

Please refer to FIG. 1 and FIG. 4. FIG. 4 is a flowchart illustrating a manufacturing method of a braille plate for elevator in accordance with an embodiment of the present invention. As described in the steps of FIG. 4, the manufacturing method includes the following steps. Step A1: a body 1 mounts to an elevator is provided. Step A2: a substrate 30 having a pattern shape forms on the body 1 via a crosslinking agent. Step A3: at least one main layer 32 forms on the substrate 30 according to a ratio which is dependent on a maximum diameter and a maximum height. Step A4: a bump structure 31 forms by curing the at least one main layer 32 via a curing process which is a curing method with heat processing, optical processing or combinations thereof. Step A5: a braille character 2 finally forms on the body 1 by repeatedly or synchronous multiple-times performing the step A1 to step A4.

As described in the step A3, the term "ratio" refers to a result that be obtained by dividing the value of the diameter by the value of its corresponding height in each certain position, of the main layer 32 (e.g., the maximum diameter D and its corresponding maximum height H shown in FIG. 1). In one example, when the aforementioned the outer contour of the bump structure 31 is a semi-spherical shape, the ratio of the maximum diameter D and maximum height H is 2 (i.e., D/H =2). In another example, when the aforementioned the outer contour of the bump structure 31 is at least in part by a continuous curved surface with same direction, the ratio of the maximum diameter D and the maximum height H is between 1.5 and 3 (i.e., 1.5≦D/H≦3).

As described in the step A4, the term "curing process" refers to the act includes any suitable heat processing or optical processing ways. Specifically, the aforementioned main layer 32 may be cured by irradiating with UV light if the material of it containing photo-curable resin (i.e., photosensitive resin). The main layer 32 may be cured by heating with infrared radiation if the material of it containing heat-curable resin (i.e., thermosetting resin). Furthermore, the main layer 32 may be cured by alternatively using the aforementioned ways if the material of the main layer 32 containing both of photo-curable resin and heat-curable resin.

Specifically, as described in the step A3 or in the step A4, the aforementioned main layer 32 is possible to have a decorative layer 33 therein or thereon by performing the step A5, and optionally select to use a surface treatment method for processing the bump structure 31 to having different visual effects such as matte surface, semi-matte surface, with multiple reliefs and forged surface. The term "surface treatment" used here is to generally refer to the process for processing a physical object to present a predetermined visual effect.

The above description is merely the embodiments in the present invention; the claim is not limited to the description thereby. The equivalent structure or changing of the process of the content of the description and the figures, or to implement to other technical field directly or indirectly should be included in the claim. All other embodiments obtained by a person of ordinary skill in the art based on the embodiments of the present invention without creative efforts shall fall within the protection scope of the present invention.

## Claims

1. A braille plate for elevator comprises:
a plurality of substrates, formed on a body being an elevator decorative plate, wherein the plurality of substrates contain a crosslinking agent; and
a plurality of bump structures, any one of the bump structures forms on any one of the substrates correspondingly, wherein the plurality of bump structures is formed via at least one main layer;
wherein the at least one main layer is formed via a maximum diameter and a maximum height;
wherein the maximum height is formed by a ratio which is determined by the maximum diameter : the maximum height.

2. The braille plate for elevator as claimed in claim 1, wherein at least a portion of the main layer further includes a decorative layer.

3. The braille plate for elevator as claimed in claim 1, wherein pattern shapes of the plurality of substrates are round shapes, polygon shapes or combinations thereof.

4. The braille plate for elevator as claimed in claim 1, wherein the crosslinking agent is polyisocyanate-based coating, epoxy-based coating or ammonia-based coating.

5. The braille plate for elevator as claimed in claim 1, wherein the at least one main layer is made of PMMA, PET, PC, PDMS, ceramics, glasses or combinations thereof.

6. The braille plate for elevator as claimed in claim 1, wherein the ratio is between 1.5 and 3.

7. A manufacturing method of a braille plate for elevator claimed in claim 1, comprising:
(A1) providing a body mounted on an elevator and the body is an elevator decorative plate;
(A2) forming a substrate having a pattern shape on the body via coating crosslinking agent;
(A3) forming at least one main layer on the substrate in accordance with a maximum diameter and a maximum height, wherein the maximum height is formed by a ratio which is determined by the maximum diameter : the maximum height;
(A4) curing the at least one main layer via a curing process to form a plurality of bump structures; and
(A5) repeating the aforementioned steps (A1) to (A4) in multiple times or synchronously, and a braille character is formed on the body via the plurality of bump structures.

8. The manufacturing method of a braille plate for elevator as claimed in claim 7, wherein the ratio in step (A3) depends on a maximum diameter and a maximum height of the at least one main layer, and the ratio is further between 1.5 and 3.

9. The manufacturing method of a braille plate for elevator as claimed in claim 7, wherein the curing process in step (A4) is a curing method with heat processing, optical processing or combinations thereof.

10. The manufacturing method of a braille plate for elevator as claimed in claim 7, wherein the braille character in step (A5) is formed by forming the plurality of bump structures one by one or simultaneously.
